# EUROPÄISCHE PATENTSCHRIFT

(11) **EP 0 424 683 B1**
(45) Veröffentlichungstag und Bekanntmachung des Hinweises auf die Patenterteilung: **28.07.1993**
(21) Anmeldenummer: 90118648.6
(22) Anmeldetag: 28.09.1990
(51) Int. Cl.: B65G 21/10

(54) **Gurtförderer mit zwei im Winkel zueinander einstellbaren Förderstrecken**
Belt conveyor with two conveyor-parts forming an adjustable angle with each other
Convoyeur à bande comportant deux segments réglables angulairement l'un par rapport à l'autre

(30) Priorität: 21.10.1989 DE 3935175
(43) Veröffentlichungstag der Anmeldung: 02.05.1991
(73) Patentinhaber: AXMANN-FÖRDERTECHNIK GMBH, D-74889 Sinsheim (DE)
(72) Erfinder: Axmann, Norbert, Dipl.-Ing., D-6920 Sinsheim-Ho. (DE)
(74) Vertreter: Geitz, Heinrich, Dr.-Ing.

(56) Entgegenhaltungen:
- DE-U- 8 407 676
- FR-A- 2 322 805
- GB-A- 646 190
- GB-A- 773 500

## Beschreibung

Die Erfindung bezieht sich auf einen Gurtförderer mit zwei im Winkel zueinander einstellbaren Förderstrecken und einem beidendig über je eine Umlenkrolle, von denen wenigstens eine angetrieben und zumindest eine quer zu ihrer Drehachse verschiebbar gelagert ist, geführten Endlosfördergurt, dessen Förderstrecken über eine zu den Drehachsen der Umlenkrollen parallele Anlenkachse miteinander verbunden sind, die auf der von der unteren Trumlage des Fördergurtes abgewandten Seite im Abstand von der oberen Trumlage angeordnet ist, wobei die Trumlagen des Fördergurtes im Schwenkbereich zwischen den Förderstrecken mittels Leitrollen umgelenkt sind.

Gurtförderer dieser Art, die häufig auch als Winkelförderbänder bezeichnet werden, sind allgemein bekannt und zeichnen sich durch ihre günstige Anpaßbarkeit an unterschiedliche Einsatzbedürfnisse aus, indem zu einer zumeist horizontal verlaufenden Förderstrecke eine in Förderrichtung folgende Förderstrecke unter einem vom jeweiligen Bedarfsfall bestimmten Winkel einstellbar ist

Aus der DE-U-84 07 676.7 ist ein Gurtförderer der vorgenannten Art vorbekannt, bei dem zwei winkeleinstellbare Förderstrecken über eine beabstandet über der oberen Trumlage angeordnete Anlenkachse miteinander verbunden sind und im Winkelbereich die Trumlagen durch von oben an diesen angreifende Stützrollen geführt werden.

Bei diesem vorbekannten Gurtförderer sind die Trumlagen des Fördergurtes mit ihren seitlichen Rändern auf sogenannten Abdeckgliedern aufliegend geführt. Dadurch soll verhindert werden, daß Personen in den Bereich zwischen den Fördergurträndern hineingreifen und sich,dabei verletzen können.

Durch die Erfindung ist hingegen ein Gurtförderer der im Oberbegriff des Patentanspruchs 1 angegebenen Art dadurch verbessert worden, daß die den beiden Förderstrecken zugeordneten Fördergurtabschnitte in mittels der Anlenkachse winkeleinstellbaren Wannen mit sich auf beiden Längsseiten des Fördergurtes erstreckenden und über dessen obere Trumlage hinausragenden Seitenwangen aufgenommen sind, daß im Bereich der Anlenkachse die Seitenwangen der beiden aneinandergrenzenden Wannen im gesamten Verstellbereich der beiden Förderstrecken einander überlappen und daß die Achse jedenfalls einer Umlenkrolle in Fördergurtlängsrichtung an vorgespannten Federmitteln mit über den gesamten Verschwenkbereich der Förderstrecken gegeneinander zumindest annähernd gleichbleibender Federkraft elastisch nachgiebig abgestützt ist.

Eine derartige Ausbildung des erfindungsgemäßen Gurtförderers hat gegenüber herkömmlichen Gurtförderern mit über die obere Trumlage hinausragenden Seitenwangen den Vorteil, daß im gesamten Verschwenkbereich der beiden Förderstrecken zwischen den Seitenwangen der die zugeordneten Fördergurtabschnitte aufnehmenden Wannen keine unerwünschten zwickelartigen Öffnungen auftreten können, so daß durch in derartige zwickelartige Öffnungen gelangende Kleinteile bedingte Betriebsstörungen vermieden werden.

Ferner werden die angesichts der Lage der Anlenkachse bei Winkeländerungen zwischen den beiden Förderstrecken auftretenden Längenänderungen erfindungsgemäß in einfacher Weise dadurch selbsttätig ausgeglichen, daß eine der den Fördergurt führenden Umlenkrollen in Fördergurtlängsrichtung verschiebbar gelagert und beidendig an seiner Achse elastisch nachgiebig abgestützt ist. Dadurch bleibt über den gesamten in Betracht kommenden Verstellbereich die die Abstützung vermittelnde Federkraft wenigstens annähernd gleich. Unabhängig von Winkeleinstellungen der Förderstrecken zueinander bleibt mithin auch die einmal eingestellte Fördergurtspannung im wesentlichen gleich. Dieser gleichbleibenden Fördergurtspannung kommt für ein verschleißarmes Laufen des Fördergurtes wesentliche Bedeutung zu.

Zwar ist es aus der GB-A-773 500 schon vorbekannt, die Gurtspannung bei Gurtförderern mittels einer Gasdruckfederbeaufschlagung einer quer zu ihrer Drehachse verschiebbar gelagerten Umlenkrolle zu verwirklichen, aber der Gurtförderer nach dieser Vorveröffentlichung besitzt keine im Winkel gegeneinander verstellbaren Förderstrecken.

Bei einer zweckmäßigen Ausführungsform des erfindungsgemäßen Gurtförderers sind die jeweils aneinanderstoßenden Seitenwangen der winkeleinstellbar aneinander angelenkten Wannen der beiden Förderstrecken über Gelenke miteinander verbunden, welche die sich in Parallellage zu den Drehachsen der Umlenkrollen im Abstand über der oberen Trumlage des Fördergurtes erstreckende Anlenkachse bilden.

Ein anderes wichtiges Ausgestaltungsmerkmal der Erfindung besteht darin, daß als Federmittel zum elastisch nachgiebigen Abstützen der Achse der in Fördergurtlängsrichtung beweglich gelagerten Umlenkrolle beidendig an dieser Achse angreifende Gasdruckfedern mit besonders weicher Federkennung dienen. Dadurch ist bei einfacher und kostengünstiger Bauweise neben dem erwünschten Längenausgleich in Abhängigkeit von der jeweiligen Winkeleinstellung der Förderstrecken zueinander eine weitgehend konstante Gurtspannung gewährleistet

Eine Ausführungsform der Erfindung soll nachstehend anhand der beigefügten Zeichnung erläutert werden. In schematischen Ansichten zeigen:
- Fig. 1: einen Winkel-Gurtförderer mit zwei im Winkel zueinander einstellbaren Förderstrecken in einer perspektivischen Ansicht,
- Fig. 2: den Gurtförderer nach Fig. 1 in einer seitlichen Ansicht,
- Fig. 3: verschiedene Einstellungsvarianten des Gurtförderers,
- Fig. 4: einen Querschnitt gemäß der Schnittlinie IV-IV in Fig. 2 durch die eine Förderstrecke des Gurtförderers,
- Fig. 5: einen Querschnitt gemäß der Schnittlinie V-V in Fig. 2 durch die andere Förderstrecke,
- Fig. 6: in einer dem Schnittverlauf VI-VI in Fig. 2 entsprechenden Schnittansicht die elastisch nachgiebige Abstützung der einen Umlenkrolle mittels beidendig an deren Achse angreifender Gasdruckfedern,
- Fig. 7: in einer vergrößerten Seitenansicht eines der die Seitenwangen der den beiden Förderstrecken zugeordneten Wannen miteinander verbindenden Gelenke und
- Fig. 8: einen Vertikalschnitt gemäß der Schnittlinie VIII-VIII in Fig. 7 durch das Gelenk.

Bei dem in der Zeichnung veranschaulichten Gurtförderer 10 handelt es sich um ein mobiles Gerät mit zwei im Winkel zueinander einstellbaren Förderstrecken 11, 12, das höheneinstellbar auf einem Ständer 13 mit unterseitigen Laufrollen 14 aufgenommen ist. Eine der beiden Förderstrecken ist in hier zunächst nicht interessierender Weise an einer Säule 15 des Ständers 13 schwenkbar angelenkt und die beiden Förderstrecken sind in unten noch näher zu beschreibender Weise winkeleinstellbar aneinander angelenkt.

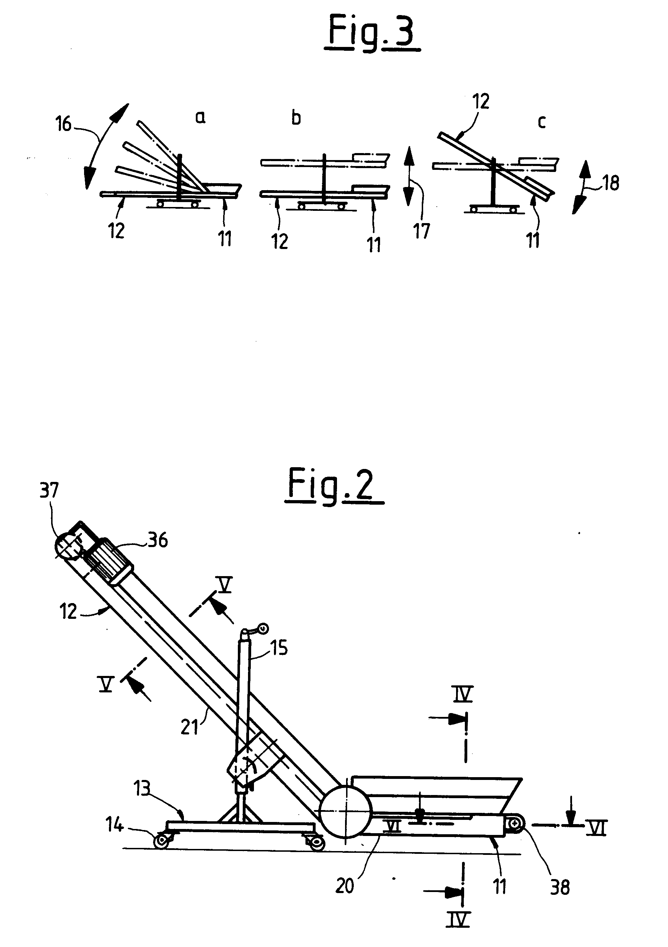

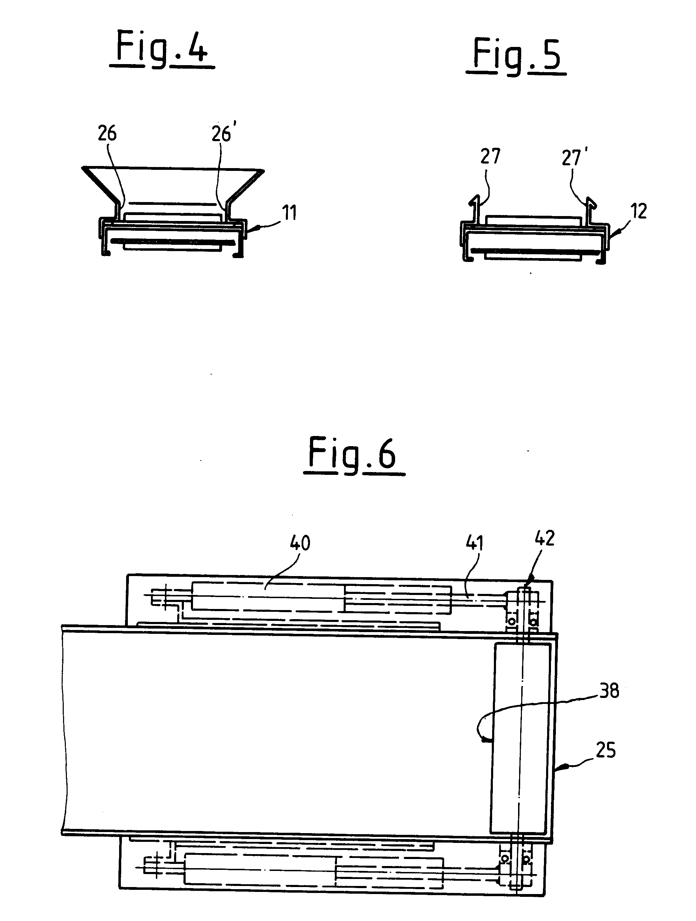

Verschiedene Möglichkeiten der Einstellung der Förderstrekken 11, 12 zueinander und der Höheneinstellung veranschaulicht Fig. 3. Dabei zeigt Fig. 3a in vollen Linien eine Einstellung, in der die beiden Förderstrecken sich in Strecklage befinden und in ihrer tiefsten Einstellage stehen. In strichpunktierten Linien sind dann einige Winkeleinstellungen der einen Förderstrecke gegenüber der anderen, in Horizontallage belassenen Förderstrecke gezeigt. Diese Winkeleinstellbarkeit der beiden Förderstrecken zueinander deutet der Doppelpfeil 16 an. In Fig. 6b ist hingegen in ausgezogenen Linien wiederum der Gurtförderer mit den in Strecklage in der tiefsten Stellung stehenden Förderstrecken 11, 12 gezeigt und in strichpunktierten Linien in der höchsten Einstellung, und zwar ebenfalls bei Strecklage der beiden Förderstrekken. Der Doppelpfeil 17 deutet die Höheneinstellbarkeit an. In Fig. 6c sind strichpunktiert die in Strecklage stehenden Förderstrecken 11, 12 in ihrer höchsten Einstellung veranschaulicht und in ausgezogenen Linien bei Aufrechterhaltung der Strecklage in einer Winkellage. Diese Verschwenkbarkeit um einen Anlenkpunkt an der Säule 15 des Ständers 13 deutet der Doppelpfeil 18 an.

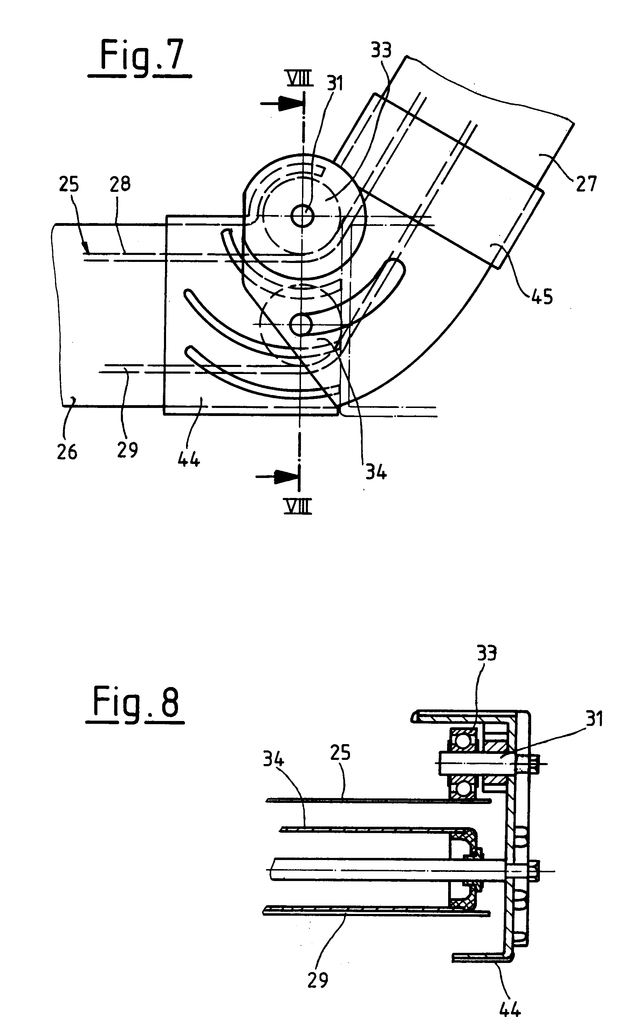

Jede der beiden Förderstrecken 11, 12 umfaßt eine langgestreckte Wanne 20, 21, in denen ein beidendig über Umlenkrollen 23, 24 geführter Endlosfördergurt 25 mit je einem jeder Förderstrecke zugeordneten Gurtabschnitt aufgenommen ist. Diese Wannen sind mit Seitenwangen 26, 26′ und 27, 27′ versehen, die sich längs des Fördergurtes 25 erstrecken und über dessen obere Trumlage 28 hinausragen. Im Bereich der genannten Seitenwangen sind die beiden Wannen über Gelenke 30 miteinander verbunden, die eine sich parallel zu den Drehachsen der Umlenkrollen im Abstand über der oberen Trumlage des Fördergurtes erstreckende Anlenkachse 31 bilden. In dem von den genannten Gelenken vermittelten Schwenkbereich sind die beiden Trumlagen 28, 29 des Fördergurtes 25 durch spezielle Leitrollen 33, 34 geführt, was insbesondere aus den Fig. 7 und 8 ersichtlich ist.

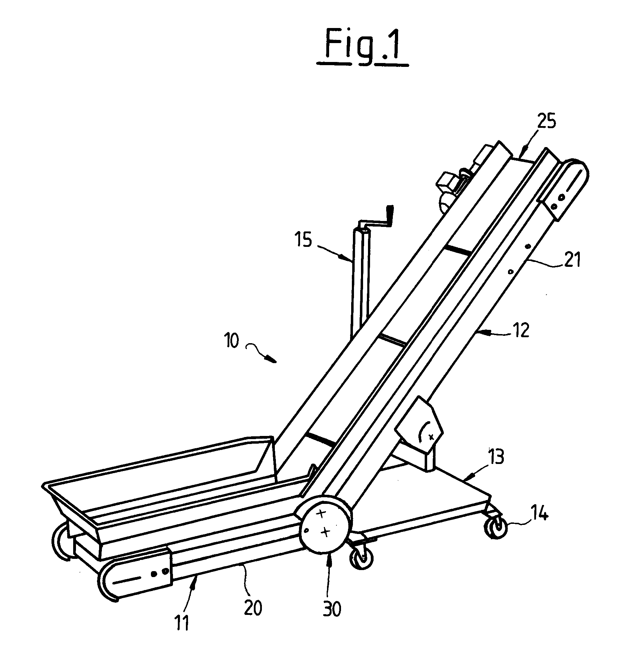

Wie insbesondere die Fig. 1 und 2 zeigen, haben die über die genannten Gelenke miteinander verbundenen Förderstrecken 11, 12 unterschiedliche Längen. Die Förderstrecke 12 mit der größeren Längenerstreckung ist in im einzelnen hier nicht interessierender Weise an der Säule 15 des Ständers 13 angelenkt und an dem von der anderen Förderstrecke 11 abgewandten Ende mit einem Antriebsmotor 36 zum Antreiben der an diesem Ende angeordneten Umlenkrolle 37 ausgerüstet. Die Umlenkrolle 38 am Ende der anderen Förderstrecke besitzt keinen Antrieb, ist aber in Richtung der Förderbandlängserstrekkung bewegbar gelagert und elastisch nachgiebig mittels zweier Gasdruckfedern 40 abgestützt, die an den Seitenwangen 26 der zugeordneten Wanne 20 befestigt sind und deren Kolbenstangen 41 an stirnseitig über die genannte Umlenkrolle vorstehenden Lagerzapfen 42 angreifen. Im übrigen sind diese Lagerzapfen in nicht dargestellten Längsführungen aufgenommen, die eine Bewegung der Umlenkrolle 38 in Fördergurtlängsrichtung ermöglichen.

Eines der die Seitenwangen 26, 27 der den beiden Förderstrecken 11, 12 zugeordneten Wannen 20, 21 verbindenden Gelenke 30 ist in den Fig. 7 und 8 in vergrößerten Ansichten gezeigt. Dieses Gelenk besitzt zwei um eine Anlenkachse 31 verschwenkbare Gelenkteile 44, 45, die jeweils mit einer der aneinandergrenzenden Seitenwangen 26, 27 fest verbunden sind. Die Anlenkachse 31 verläuft parallel zu den Drehachsen der endseitigen Umlenkrollen 37, 38 des Fördergurtes 25 und ist im Abstand über der oberen Trumlage 28 des Fördergurtes 25 angeordnet. Dies zeigen insbesondere die Fig. 7 und 8.

An dem einen Gelenkteil 44 ist fluchtend mit der Anlenkachse 31 zwischen den beiden Förderstrecken eine Leitrolle 33 drehbar gelagert, die den Rand der oberen Trumlage 28 des Fördergurtes 25 übergreift und mithin diesen in der aus Fig. 7 ersichtlichen Weise führt. An demselben Gelenkteil ist zwischen den beiden Trumlagen 28, 29 eine weitere Leitrolle 34 drehbar gelagert, die den Untergurt 29 des Fördergurtes 25 randseitig übergreift und ebenfalls im Schwenkbereich führt. Mittels eines gleichartigen Gelenks sind die beiden Seitenwangen der den Förderstrecken 11, 12 zugeordneten Wannen auf der anderen Seite des Fördergurtes 25 miteinander verbunden.

Die jeweils gegeneinander verschwenkbaren Gelenkteile 44, 45 der beiden Gelenke 30 sind zwischen einer Strecklage mit einem Winkel von 180° zwischen den beiden Förderstrecken und einer Einstellage verschwenkbar, in der die Förderstrecken 11, 12 einen Winkel von ca. 135° einschließen. Diese Einstellage zeigen die Fig. 1 und 2. Die Verstellung im gesamten Verstellbereich erfolgt stufenlos und in jeder Winkeleinstellung sind die Gelenkteile mittels nicht weiter dargestellter Arretierungsmittel feststellbar.

Angesichts der Lage der Anlenkachse 31 zwischen den beiden Förderstrecken 11, 12 im Abstand von der oberen Trumlage 28 des Fördergurtes 25 führt jede Winkeleinstellung der einen Förderstrecke gegenüber der anderen Förderstrecke zu einer Verschiebung der in Fördergurtlängsrichtung beweglich gelagerten und mittels der bereits erwähnten Gasdruckfedern 40 elastisch abgestützten Umlenkrolle 38 am Ende der Förderstrecke 11. Die an den in - nicht gezeigten - Längsführungen aufgenommenen Lagerzapfen 42 dieser Umlenkrolle angreifenden Gasdruckfedern 40 haben extrem flach verlaufende Federkennlinien, so daß unbeschadet einer durch Winkeleinstellungen der Förderstrecken zueinander bedingten Verschiebung der genannten Umlenkrolle auf diese weitgehend gleichbleibende Abstützkräfte wirken. Dadurch ist sichergestellt, daß unabhängig von den Winkeleinstellungen der Förderstrecken die durch die Gasdruckfedern bewirkte Gurtspannung nahezu konstant bleibt.

## Patentansprüche

1. Gurtförderer mit zwei im Winkel zueinander einstellbaren Förderstrecken (11, 12) und einem beidendig über je eine Umlenkrolle (37, 38), von denen wenigstens eine angetrieben und zumindest eine quer zu ihrer Drehachse verschiebbar gelagert ist, geführten Endlosfördergurt (25), dessen Förderstrecken (11, 12) über eine zu den Drehachsen der Umlenkrollen (37, 38) parallele Anlenkachse (31) miteinander verbunden sind, die auf der von der unteren Trumlage (29) des Fördergurtes (25) abgewandten Seite im Abstand von der oberen Trumlage (28) angeordnet ist, wobei die Trumlagen (28, 29) des Fördergurtes (25) im Schwenkbereich zwischen den Förderstrecken (11, 12) mittels Leitrollen umgelenkt sind,
dadurch gekennzeichnet,
daß die den beiden Förderstrecken (11, 12) zugeordneten Fördergurtabschnitte in mittels der Anlenkachse (31) winkeleinstellbaren Wannen (20, 21) mit sich auf beiden Längsseiten des Fördergurtes (25) erstreckenden und über dessen obere Trumlage hinausragenden Seitenwangen (26, 26'; 27, 27') aufgenommen sind, daß im Bereich der Anlenkachse (31) die Seitenwangen (26, 26'; 27, 27') der beiden aneinandergrenzenden Wannen (20, 21) im gesamten Verstellbereich der beiden Förderstrecken einander überlappen und daß die Achse (42) jedenfalls einer Umlenkrolle (38) in Fördergurtlängsrichtung an vorgespannten Federmitteln (40, 41) mit über den gesamten Verschwenkbereich der Förderstrecken gegeneinander zumindest annähernd gleichbleibender Federkraft elastisch nachgiebig abgestützt ist.

2. Gurtförderer nach Anspruch 1, dadurch gekennzeichnet, daß die jeweils aneinanderstoßenden Seitenwangen (26, 27) der winkeleinstellbar aneinander angelenkten Wannen (20, 21) der beiden Förderstrecken (11, 12) über Gelenke (30), welche die Anlenkachse (31) bilden, gelenkig miteinander verbunden sind.

3. Gurtförderer nach Anspruch 1 oder 2, dadurch gekennzeichnet, daß als Federmittel zum elastisch nachgiebigen Abstützen der Achse (42) der in Fördergurtlängsrichtung beweglich gelagerten Umlenkrolle (38) beidendig an dieser Achse angreifende Gasdruckfedern (40, 41) mit besonders weicher Federkennung dienen.

## Claims

1. Belt conveyor with two conveying paths (11, 12), which are settable each at an angle to the other, and an endless conveyor belt (25), which is guided at both ends over a respective one of guide rollers (37, 38), of which at least one is driven and at least one is borne to be displaceable transversely to its rotational axis, and the conveying paths (11, 12) of which are connected together by way of an articulation axle (31), which is parallel to the rotational axes of the guide rollers (37, 38) and arranged at a spacing from the upper belt run (28) on the side remote from the lower belt run (29) of the conveyor belt (25), wherein the belt runs (28, 29) of the conveyor belt (25) are deflected by means of guide rollers in the pivotal region between the conveying paths (11, 12), characterised thereby, that the conveyor belt portions associated with both the conveying paths (11, 12) are received in troughs (20, 21), which are settable angularly by means of the articulation axle (31) and have side cheeks (26, 26'; 27, 27') extending on both longitudinal sides of the conveyor belt (25) and projecting over its upper belt run, that the side cheeks (26, 26'; 27, 27') of both the mutually adjoining troughs (20, 21) overlap one the other in the region of the articulation axle (31) over the entire range of adjustment of both the conveying paths (11, 12) and that the axle (42) of in any case one guide roller (38) is supported in elastically yielding manner in the longitudinal direction of the conveyor belt (25) at biassed spring means (40, 41) with a spring force remaining at least nearly constant one against the other over the entire pivotal range of the conveying paths (11, 12).

2. Belt conveyor according to claim 1, characterised thereby, that the respectively mutually abutting side cheeks (26, 27) of the troughs (20, 21), which are each articulatedly connected to the other to be settable in angle, of both the conveying paths (11, 12) are each articulatedly connected to the other by way of hinges (30), which form the articulation axle (31).

3. Belt conveyor according to claim 1 or 2, characterised thereby, that gas pressure springs (40, 41) of particularly soft spring characteristic engage at both ends of the axle (42) as spring means for the elastically yielding support of the axle (42) of the guide roller (38) borne to be movable in the longitudinal direction of the conveyor belt (25).

## Revendications

1. Transporteur à courroie, comportant deux lignes de convoyage (11, 12), faisant entre elles un angle réglable, et une courroie de transport sans fin (25), guidée, à chacune de ses extrémités, sur un rouleau de renvoi (37, 38), dont au moins l'un est mené et au moins l'un est logé de façon à pouvoir se déplacer perpendiculairement à son axe de rotation, transporteur dont les lignes de convoyage (11, 12) sont reliées l'une à l'autre par l'intermédiaire d'un axe d'articulation (31), parallèle à l'axe de rotation des rouleaux de renvoi (37, 38), axe qui est disposé sur le côté opposé au brin inférieur (29) de la courroie (25), à une certaine distance du brin supérieur (28), les brins (28, 29) de la courroie de transport (25) étant renvoyés, dans la zone de pivotement entre les lignes de convoyage (11, 12), à l'aide de rouleaux de guidage,
caractérisé en ce que
les deux segments de courroie de transport affectés aux deux lignes de convoyage (11, 12) sont logés dans des bacs (20, 21), pouvant être réglés en position angulaire à l'aide de l'axe d'articulation (31), et comportant des ridelles latérales (26, 26' ; 27, 27') s'étendant sur les deux côtés longitudinaux de la courroie de transport (25) et dépassant leur brin supérieur ; que, dans la zone de l'axe d'articulation (31), les ridelles latérales (26, 26' ; 27, 27') des deux bacs contigus (20, 21) se recouvrent l'une l'autre dans toute la zone de déplacement des deux lignes de convoyage ; et que l'axe (42) de chaque rouleau de renvoi (38) est soutenu par un soutien élastique et déformable dans le sens longitudinal de la courroie de transport, à l'aide de moyens élastiques prétendus (40, 41), présentant une force élastique réciproque au moins approximativement constante dans la totalité de la zone de déplacement des lignes de convoyage.

2. Transporteur à courroie selon la revendication 1, caractérisé en ce que les ridelles latérales (26, 27) contiguës des bacs (20, 21), articulés l'un à l'autre de façon à avoir une position angulaire variable, des deux lignes de convoyage (11, 12), sont assemblées l'une à l'autre d'une manière articulée par l'intermédiaire d'articulations (30) formant l'axe d'articulation (31).

3. Transporteur à courroie selon les revendications 1 ou 2, caractérisé en ce qu'on utilise comme moyen élastique destiné à l'appui élastique et déformable de l'axe (42) du rouleau de renvoi (38), logé de façon à pouvoir se déplacer dans le sens longitudinal de la courroie de transport, des ressorts à pression de gaz (40, 41), agissant sur les deux extrémités de cet axe, et présentant une caractéristique particulièrement importante de flexibilité.
